# EUROPEAN PATENT SPECIFICATION

(11) **EP 2 608 227 B1**
(45) Date of publication and mention of the grant of the patent: **11.06.2014**
(21) Application number: 12193893.0
(22) Date of filing: 22.11.2012
(51) Int. Cl.: H01F 7/14

(54) **An electro pneumatic converter with low hysteresis characteristic**
Elektropneumatischer Wandler mit Niederhysterese-Merkmal
Convertisseur électropneumatique avec faible caractéristique d'hystérésis

(30) Priority: 19.12.2011 KR 20110137177
(43) Date of publication of application: 26.06.2013
(73) Proprietor: Young Tech Co., Ltd., Gimpo-si, Keonggi-Do (KR)
(72) Inventor: Lee, Yong Hee, Gimpo-si, Keonggi-Do (KR)
(74) Representative: RACKETTE Partnerschaft Patentanwälte

(56) References cited:
- EP-A2- 0 346 758
- KR-A- 20110 112 979
- US-A- 5 927 249
- US-B2- 7 804 386

## Description

### [Field of the Invention]

The present invention relates to an electro pneumatic converter of a pneumatic position controller / positioner, and more particularly, to an electro pneumatic converter which yields low hysteresis.

### [Background of the Invention]

An electro pneumatic converter converts the electric current into a mechanical torque and converts it into air pressure.

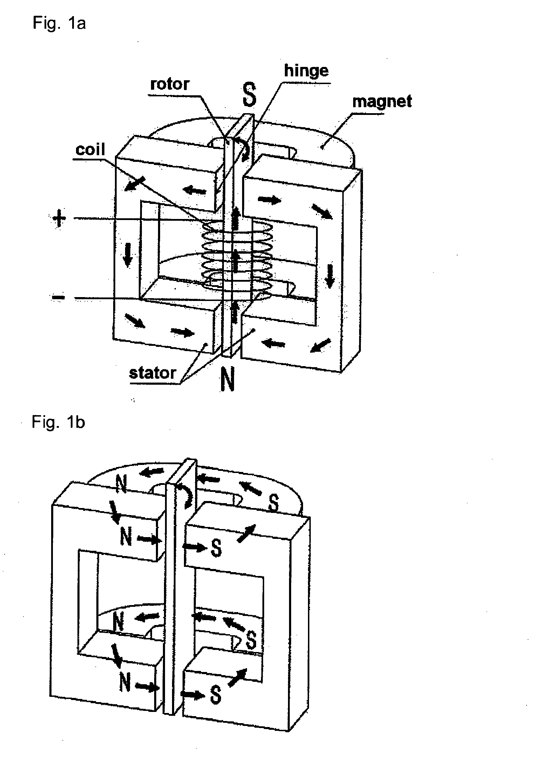

Figure 1a and 1b shows a rough structure and operating mechanism of an electro pneumatic converter. As shown in figure 1a, an electric current in a coil creates a magnetic field, and this magnetic field will create a closed magnetic loop through a rotor and a stator. The magnetic field which was created by a magnet will create a closed magnetic loop through a stator, as shown in figure 1b. The interaction between a magnetic field from a coil and a magnetic field from a magnet will create force for the rotor to rotate around a hinge.

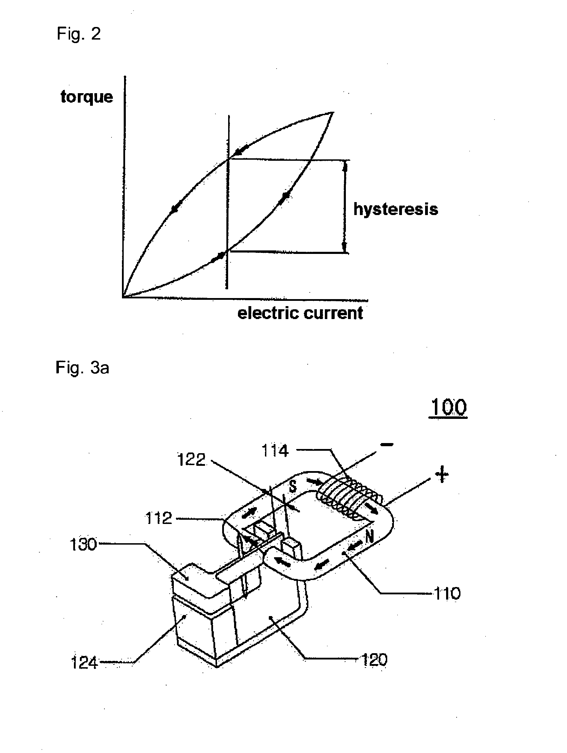

In this previous electro pneumatic converter, a magnetic field from a magnet will create closed loop through stator. A magnetic field from a magnetic tends to be very strong; therefore, it is typical that the stator material must be high level of saturated magnetic flux density. As shown in figure 1a, a magnetic field from a coil also flows through a stator. Due to a low level of magnetic field from a coil, as the magnetic field flows through the high level of saturated magnetic flux density material, high hysteresis will be created. Therefore, as shown in figure 2, there will be a big difference between the upward electric current's torque and the downward electric current's torque. Due to high hysteresis, the electro pneumatic converter will not be able to perform precise control.

US Patent No. 5,927249 describes an electromotive adjustment device. The electromotive adjustment device has a rotor made of the permanent magnetic materials. The permanent magnetic materials, e.g. ferrite, Sm-Co, Alico, etc. are heavy materials. So, the rotor cannot response rapidly.

Korean Patent Publication No. 10-2011-0112979 describes a torque motor device for positioner, but does not specify a rotor's material, and rotor's movement direction.

### [Content of the Invention]

### [Issue]

This invention is to supply electro pneumatic converter which yields low hysteresis.

### [Method]

A low hysteresis signature electro pneumatic converter will be supplied. The electro pneumatic converter includes first stator, bentplated second stator, and rotor. First stator is equipped with a gap and partially wrapped coil. Second stator is equipped with a gap on one end and a permanent magnet on other end which magnetize the rotor. First stator gap and second stator gap are installed side by side. One end of the rotor is installed closely with respect to a permanent magnet, and the other side of rotor is installed towards first stator and second stator gap. The rotor is installed to be able to move between first and second stator gap according to variable electric current.

Desirably, second stator material should be a higher level of saturated magnetic flux density and a higher coercive force than first stator material.

Desirably, rotor material should be a higher level of saturated magnetic flux density and a higher coercive force than first stator material.

### [Effect of the Invention]

An electro pneumatic converter with low hysteresis will control with high precision.

### [Description of the Drawing]

Figure 1a shows a previous electro pneumatic converter, and it shows the flow of a magnetic field from a coil.
Figure 1b shows a previous electro pneumatic converter, and it shows the flow of a magnetic field from a permanent magnet.
Figure 2 shows the hysteresis characteristic graph of a previous electro pneumatic converter.
Figure 3a shows a currently invented electro pneumatic converter, and it shows the flow of a magnetic field from a coil.
Figure 3b shows a currently invented electro pneumatic converter, and it shows the flow of a magnetic field from a permanent magnet.
Figure 4 shows the hysteresis characteristic comparison graph between Figure 2 a previous electro pneumatic converter and a currently invented electro pneumatic converter.

### [Detailed description of the Invention]

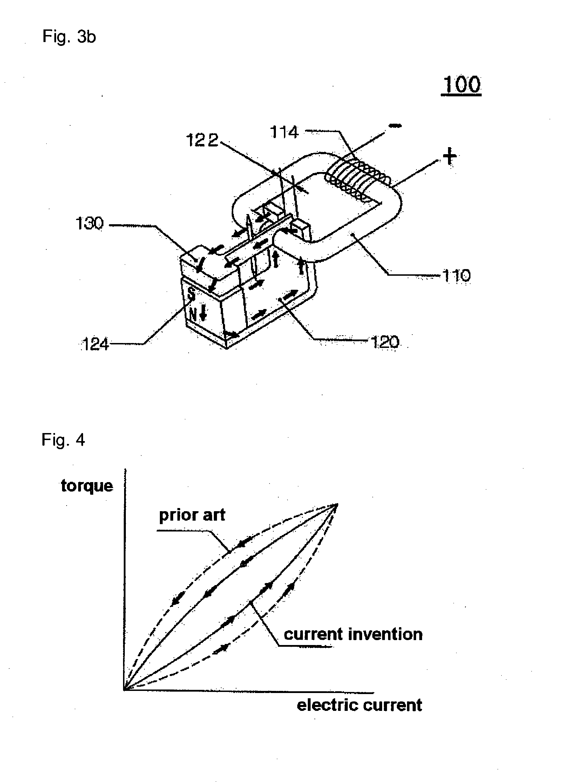

Referring to the drawings, Figure 3a and 3b shows the currently invented electro pneumatic converter (100). Also, Figure 3a shows it created closed loop by a magnetic field from a coil, and Figure 3b shows it created closed loop by a magnetic field from a permanent magnet.

This electro pneumatic converter (100) includes first stator (110), stator gap (112), coil (114), second stator (120), second stator gap (122), permanent magnet (124), and rotor (130).

First stator (110) one end is equipped with first stator gap (112), and coil (114) is partially wrapped. This first stator (110) material is low level of saturated magnetic flux density and low level of coercive force. For example, first stator (110) material can be PC (NI 78% Permalloy).

second stator (120) one end is equipped with second stator gap (122) and bend plated shape. Second stator (120) other end is equipped with permanent magnet (124). This second stator (120) material is a high level of saturated magnetic flux density and a high level of coercive force - for example, PB can be used.

First stator gap (112) and second stator gap (122) are installed side by side. Then, rotor (130), with permanent magnet (124) installed on one side, is installed between first stator gap (112) and second stator gap (122). This rotor (130) material is a high level of saturated magnetic flux density and a high level of coercive force - for example, PB (NI 45% Permalloy) can be used.

During this operation, this electro pneumatic converter (100) will operate rotor (130) by interaction between magnetic fields from a permanent magnet (124) and from a coil (114). In more detail, rotor (130) will be magnetized by permanent magnet (124) and will be polarized. If electric current flows through a coil, a magnetic field through first stator creates closed loop. The direction and the strength of the magnetic field, which has been created in between first stator gap, rotor (130) will receive a force and move.

The following explains the electro pneumatic converter (100) hysteresis signature.

Figure 3b shows that a magnetic field from a permanent magnet (124) flows through second stator (120) and rotor (130) and creates a closed loop. Because the magnetic field from permanent magnet (124) is very high, second stator (120) and rotor (130) materials should be a high level of saturated magnetic flux density and a high level of coercive force, in order for a high level of magnetic field to be passed through.

Figure 3a shows that a magnetic field from a coil (114) flows partially through first stator (110) and rotor (130). Because a magnetic field from a coil (114) is relatively weaker than a magnetic field from a permanent magnet (124), first stator (110) material is a low level of saturated magnetic flux density and a low level of coercive force; whereas rotor (130) material is high level of saturated magnetic flux density and high level of coercive force material. As shown, a relatively weak magnetic field from a coil (114) than a magnetic field from a permanent magnet (124) flows through first stator (110) which has low saturated magnetic flux density and low level of coercive force. Though a magnetic field from a coil (114) flows through high level of saturated magnetic flux density and high level of coercive force material, rotor (130), the duration of the flow is very short within the closed loop. Therefore, an electro pneumatic converter (100) will have low hysteresis characteristic.

Figure 4 shows that the hysteresis comparison between the previous and currently invented electro pneumatic converter. As the graph shows, the currently invented electro pneumatic converter has lower hysteresis than the previous electro pneumatic converter; therefore, more precise control is possible.

This description of the invention shows a detailed example of the invention. This is for explanation purpose only and does not restrict this invention in any way. This description of invention can be of different shape and purpose, and these modification and purpose covers within this invention range.

### [Description of reference numerals]

| | | | |
|---|---|---|---|
| 100 | electro pneumatic converter | 110 | first stator |
| 112 | first stator gap | 114 | coil |
| 120 | second stator | 122 | second stator gap |
| 124 | permanent magnet | 130 | rotor |

## Claims

1. An electro-pneumatic converter (100) for converting electrical current into a mechanical-torque, comprising: first stator (110); bent plated second stator (120); and rotor (130); wherein said first stator (110) is equipped with first stator gap (112) and partially wrapped with a coil (114), said second stator (120) is equipped with second stator gap (122) on one side end and a permanent magnet (124) which magnetizes said rotor (130), on the other side, said first (110) and second (120) statos are installed side by side, said rotor's one side is installed closely with respect to the permanent magnet (124, 130), and said rotor's (130) the other side is installed in said first (112) and second (122) stator gaps, said rotor's (130) the other side will be moved in said first (112) and second (122) stator gaps around said rotor's (130) one side installed on said permanent magnet (124) according to electric current applied to said coil (114), said first stator (110) is made of PC, said second stator (120) is made of PB, and said rotor (130) is made of PB.

## Patentansprüche

1. Elektro-pneumatischer Wandler zum Umwandeln von elektrischem Strom in ein mechanisches Drehmoment mit einem ersten Stator (110), mit einem gebogenen abgewinkelten zweiten Stator (120) und mit einem Rotor (130), wobei der erste Stator (110) mit einem ersten Statorspalt (112) ausgestattet und teilweise mit einer Spule (114) bewickelt ist, wobei der zweite Stator (120) an einem Ende mit einem zweiten Statorspalt (122) und an dem anderen Ende mit einem Permanentmagneten (124) ausgestattet ist, der den Rotor (130) magnetisiert, wobei der erste Stator (110) und der zweite Stator (120) nebeneinander angeordnet sind, wobei eine Seite des Rotors dem Permanentmagneten (124, 130) nahe benachbart angeordnet ist und wobei die andere Seite des Rotors (130) in dem ersten Rotorspalt (112) und in dem zweiten Rotorspalt (122) angeordnet ist, wobei die andere Seite des Rotors (130) in dem ersten Statorspalt (112) und in dem zweiten Statorspalt (122) um die eine Seite des Rotors (130), die an dem Permamentmagneten (124) angebracht ist, entsprechend die Spule (114) beaufschlagenden elektrischen Strom bewegt wird, wobei der erste Stator (110) aus PC, der zweite Stator (120) aus PB und der Rotor (130) aus PB hergestellt sind.

## Revendications

1. Convertisseur électropneumatique (100) pour convertir un courant électrique en un couple mécanique, comprenant : un premier stator (110) ; un deuxième stator courbe plaqué (120) ; et un rotor (130) ; ledit premier stator (110) étant muni d'un premier espace de stator (112) et étant partiellement entouré d'une bobine (114), ledit deuxième stator (120) étant muni d'un deuxième espace de stator (122) sur une extrémité latérale et d'un aimant permanent (124) qui aimante ledit rotor (130) sur l'autre côté, lesdits premier (110) et deuxième (120) stators étant installés côte à côte, le premier côté dudit rotor étant installé à proximité de l'aimant permanent (124, 130), et l'autre côté dudit rotor (130) étant installé dans lesdits premier (112) et deuxième (122) espaces de stator, l'autre côté dudit rotor (130) étant déplacé dans lesdits premier (112) et deuxième (122) espaces de stator autour du premier côté dudit rotor (130) installé sur ledit aimant permanent (124) en fonction d'un courant électrique appliqué à ladite bobine (114), ledit premier stator (110) étant fabriqué en PC, ledit deuxième stator (120) étant fabriqué en PB et ledit rotor (130) étant fabriqué en PB.
